## Europäisches Patentamt
## European Patent Office
## Office européen des brevets

(11) Veröffentlichungsnummer: **0 322 750**
**A1**

# EUROPÄISCHE PATENTANMELDUNG

(21) Anmeldenummer: 88121455.5

(22) Anmeldetag: 22.12.88

(51) Int. Cl.4: **B01D 33/04 , B01D 35/10**

(30) Priorität: 24.12.87 DE 8717005 U

(43) Veröffentlichungstag der Anmeldung:
05.07.89 Patentblatt 89/27

(84) Benannte Vertragsstaaten:
**BE DE FR GB NL**

(71) Anmelder: **Schimmel, Peter**
**Holter Strasse 78**
**D-4815 Schloss-Holte-Stukenbrock(DE)**

(72) Erfinder: **Schimmel, Peter**
**Holter Strasse 78**
**D-4815 Schloss-Holte-Stukenbrock(DE)**

(74) Vertreter: **Hoefer, Theodor, Dipl.-Ing.**
**Kreuzstrasse 32**
**D-4800 Bielefeld 1(DE)**

(54) **Bandfilter zum Filtern von Feststoffen o.dgl. aus Flüssigkeiten.**

(57) Bei einem Bandfilter zum Filtern von Feststoffen o.dgl. aus Flüssigkeiten mit einem das Band (13) überdeckenden Filterstoff ist auf einem aus einer oder mehreren Schichten bestehenden, flexiblen, endlosen, mit Ablußkanälen ausgestatteten Band (13) eine Wirrfaserschicht (22) als Filterschicht derart befestigt wie aufgeklebt, daß in der Befestigungszone in der Wirrfaserschicht (22) stets Durchlauföffnungen für die das Band (13) ablaufende Filterflüssigkeit gegeben sind. Dabei bestehen die Wirrfasern (22) vorzugsweise aus synthetischen Fasern mit diese verfestigenden Kunststoffbindemitteln wie Klebstoffen.

Fig. 2
„A"

## Bandfilter zum Filtern von Feststoffen o. dgl. aus Flüssigkeiten

Die Erfindung bezieht sich auf einen Bandfilter zum Filtern von Feststoffen o. dgl. aus Flüssigkeiten mit einem das Band überdeckenden bahnförmigen Filterstoff.

Zum Filtern von Feststoffen aus Flüssigkeiten sind konstruktiv aufwendige Trommelfilter bekannt, deren Nachteil darin besteht, daß die Filterkuchen in der Apparatur sich nur schwer auswaschen lassen; auch geht ein beträchtlicher Teil der Trübe beim Öffnen des Filterkörpers mit in den Feststoffaustrag, so daß derartige Filter eine zweite Stufe zur sauberen Trennung von Feststoff und Filtrat erfordern.

Bei Trommelfiltern mit angeordneten Zellen ist oftmals ein Vakuumanschluß oder Anschlüsse für Preßluft und Dampf notwendig. Das Filtergut wird von der eintauchenden Filterpresse der sich langsam drehenden Trommel angesaugt. Die aus dem Trog auftauchenden Feststoffe müssen entwässert werden.

Soweit endlos umlaufende Bandfilter bereits bekannt sind, so ist die Filterung nur unvollkommen, da bisher geeignetes und preisgünstiges Filtermaterial nicht gegeben ist, das bei längerer Standdauer leicht auszuwechseln sein muß.

Aufgabe der Erfindung ist es, einen kontinuierlich arbeitenden Filter in Form eines Bandfilters zu schaffen, bei dem ein bahnförmiges widerstandsfähiges Filtermaterial einerseits eine hohe und saubere Filterung erlaubt und andererseits nach gewisser Zeit verhältnismäßig einfach ausgewechseltwerden kann.

Diese Aufgabe wird bei einem Bandfilter mit einem mit dem Band endlos umlaufenden Filtermaterial dadurch gelöst, daß auf einem aus mehreren Schichten bestehenden, flexiblen, endlosen, mit Abflußkanälen ausgestatteten Band (Gurt) eine Wirrfaserschicht als Filterschicht derart befestigt wie aufgeklebt ist, daß in der Befestigungszone stets Durchlauföffnungen für die in das Band ablaufende Filterflüssigkeit gegeben sind.

Bei einer bevorzugten Ausführungsform ist das aus vliesförmigen Wirrfasern bestehende Filtermaterial bereichsweise mit unterschiedlichen Hohlräumen ausgestattet. Als Filtermaterial sind Wirrfaservliese vorzugsweise aus synthetischen Fasern mit diese verfestigenden Kunststoffbindemitteln vorgesehen. Diese Fasern können auch in sich selbst verfestigt sein. Das Filtermaterial kann regenerierbar sein oder die Vliese sind vorzugsweise als Wegwerfbahnen oder -platten ausgebildet, die auf ihrer Bandseite vorzugsweise mit einem geeigneten Klebstoff auf dem Band derart aufgeklebt sind, daß der Klebstoff die Wirrfasern anlöst und damit sich vernetzt und beim Erhärten verklebt. Das Band ist dadurch im Bereich dieses Klebstoffes mit größeren Öffnungen ausgestattet, so daß die Flüssigkeit auch durch den Klebstoffbereich treten und weiterhin durch das mehrschichtige Band fließen kann.

Zur Verstärkung und Verschleißminderung kann vorzugsweise auf die Fasern der Wirrfaserschicht eine anhaftende Sprühschicht aus gleichem oder anderem Kunststoff aufgesprüht sein, welche zusätzlich die Fasern aneinander binden kann, um den Zusammenhalt untereinander zu verbessern.

Vorzugsweise auf dem mehrschichtigen Transportband vorstehende T-Stollen haben die Aufgabe, das Zurücklaufen der Flüssigkeit gegen die Drehrichtung des Bandes zu verhindern. Die Flüssigkeit ist somit gezwungen, durch die im Transportband befindlichen Entwässerungskanäle nach unten abzutropfen.

Diese T-Stollen können aus Kunststoff - wie PVC - gebildet sein. Ihre Herstellung ist vorzugsweise im Spritzverfahren möglich und vorteilhaft.

Durch Abschleifen, Abschneiden der Wirrfasern oder Lösen des Klebstoffes mittels eines geeigneten Lösers kann die Wirrfaserschicht zum Auswechseln von dem Mehrschichtenband abgetrennt werden, so daß eine neue Wirrfaserschicht auf das endlose Band abschnittsweise aufgeklebt werden kann.

Bei einer bevorzugten Ausführungsform besteht das endlose Transportband oder der Gurt aus drei miteinanderverpreßten Schichten. In der Mitte des Bandes können in gewissem Abstand voneinander zwei Kunstfasereinlagen zur Aufnahme der Längs- und Querspannungen des Bandes eingewirkt sein.

In beiden Einlageschichten läßt sich vorzugsweise eine weitere PVC-Schicht einarbeiten. Auf der äußeren Trageseite des Bandes kann vorzugsweise ein Belag aus Kunststoff - wie PVC-Belag - befestigt sein. Die untere Laufseite des Bandes kann ebenfalls aus einem PVC-Belag gebildet sein.

Zur Verbesserung der Laufeigenschaften des endlosen Bandes kann der innere PVC-Belag an seiner äußeren Seite profiliert z. B. mit Kleinkaroprofil ausgestattet sein.

Derartige Bandfilter mit Wirrfaserschichten aus Kunstfasern auf mehrschichtigem Transportband sind insbesondere geeignet zum Ausfiltern von Feststoffen o. dgl. wie beispielsweise organischen oder mineralischen Stoffen (auch von Lebensmitteln o. dgl.) mit Ausnahme von Flüssigkeiten mit hochkonzentrierten Säuren.

Weitere Merkmale ergeben sich aus den Unteransprüchen.

Der Schutz erstreckt sich nicht nur auf die Einzelmerkmale, sondern auch auf deren Kombination.

Auf der Zeichnung ist ein Ausführungsbeispiel der Erfindung dargestellt. Es zeigen:

Fig. 1 eine schematische Seitenansicht eines Bandfilters mit T-Stollen und Wirrfaserschicht als Filtermaterial;

Fig. 2 einen Längsschnitt durch einen mehrschichtigen endlosen Gurt und darauf befestigter Wirrfaservliesschicht mit trennenden Stollen, entsprechend Ausschnitt "A";

Fig. 3 einen Längsschnitt einer an der Oberseite des Gurtes angeklebten Wirrfaserschicht in vergrößerter Darstellung;

Fig. 4 ein gegenüber Fig. 3 und gegenüber Fig. 2 vergrößerter Querschnitt durch den Wirrfaservliesbelag und das daran angeklebte mehrschichtige Transportband entsprechend Ausschnitt "B".

Mit 10 ist eine Bandfiltereinrichtung zum Ausfiltern von Feststoffen o. dgl. aus Flüssigkeiten bezeichnet, bei der auf einem Gestell 11 zwei Umlenk- bzw. Antriebsrollen 12 im Abstand voneinander drehbar gelagert sind, um die ein Band 13 (oder Gurt) endlos umläuft.

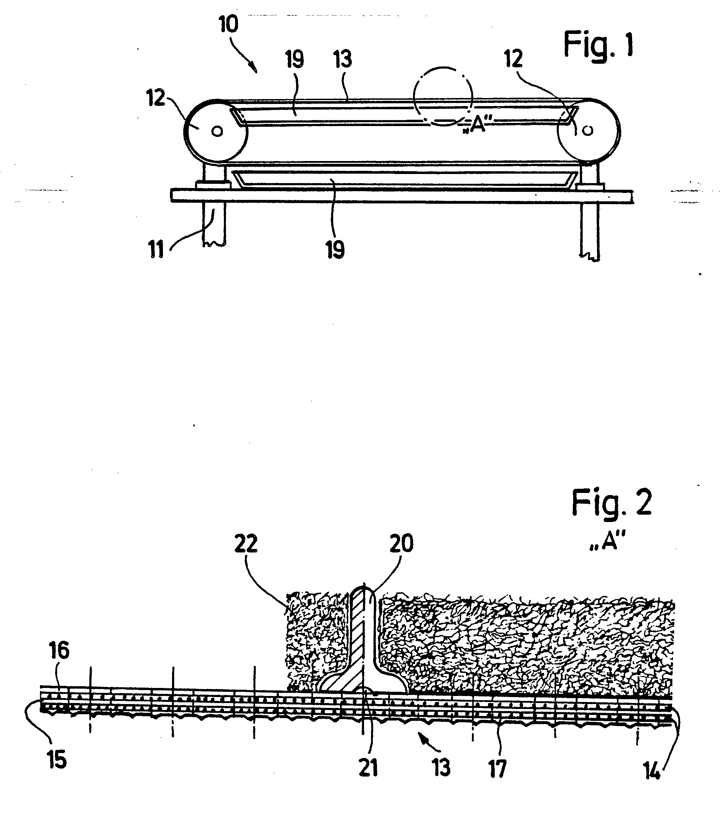

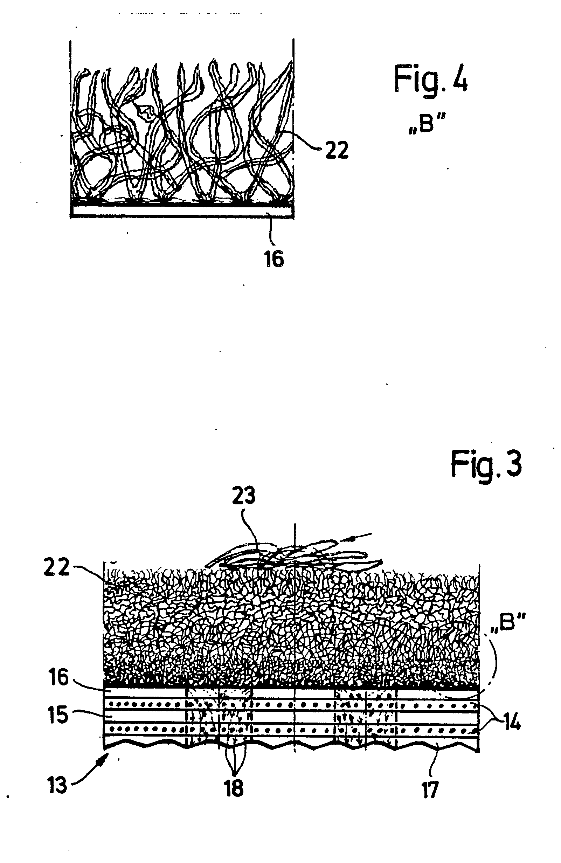

Gemäß Fig. 2 und 3 ist dieses endlose Band 13 mehrschichtig aus mehreren Lagen aufgebaut, um bei der auftretenden Belastung trotz eingearbeiteter Durchtrittsöffnungen für die Flüssigkeit angemessene Vorspannungen aufzunehmen.

Im nachfolgenden Ausführungsbeispiel ist das endlose Band 13 aus drei Schichten aufgebaut, und zwar zur Aufnahme der Längs- und Querspannungen mit einer mittleren Schicht 14 aus mindestens einer, vorzugsweise zwei geflochtenen oder gewebten Bahnen aus Kunstfasern wie Polyesterfasern. Diese geflochtenen Bahnen sind symmetrisch im Band 13 mittels einer Klebeschicht 15 eingearbeitet.

Die äußere Schicht als Trageseite besteht aus einem Kunststoffbelag 16 wie PVC-Belag, in den äußere Profilierungen eingearbeitet sein können. Auf der Innenseite (Unterseite) des Bandes 13 kann als Laufschicht ebenfalls ein Kunststoffbelag 17 wie ein PVC-Belag gebildet sein, der ebenfalls mit Profilierungen ausgestattet sein kann. Alle Schichten sind miteinander unlösbar heiß verpreßt.

Bei einem Ausführungsbeispiel kann der außenseitige Kunststoffbelag etwa 0,6 bis 0,8 mm, vorzugsweise 0,7 mm stark sein.

Die Klebeschicht 15 zwischen zwei geflochtenen Polyestereinlagen kann eine Dicke von 0,6 - 0,8 mm, vorzugsweise 0,7 mm aufweisen. Der Laufbelag aus Kunststoff ist zwischen 0,5 bis 0,7 mm, vorzugsweise 0,6 mm dick.

Der Gesamtdurchmesser (Dicke) des Bandes 13 kann zwischen 3,0 bis 3,5 mm, vorzugsweise 3,2 bis 3,3 mm, liegen und das Eigengewicht des Bandes kann zwischen 3 bis 4 kg/qm, vorzugsweise 3,5 kg/qm, liegen.

Die seitlichen Bandkanten können mittels Heißverschweißung miteinander verbunden sein.

In dieses, vorzugsweise dreischichtige endlose Band, das auch weniger oder mehr Schichten haben kann, sind viele durchgehende Kanäle 18 eingearbeitet, durch welche die Filterflüssigkeit ablaufen kann und zwar vorzugsweise in eine Auffangschale 19, die unterhalb des oberen und des unteren Trums des endlosen Bandes 13 eingeschaltet ist.

Auf diesem mehrschichtigen endlosen Band 13 sind in angemessenen Abständen sogenannte T-Stollen 20 aus Kunststoff befestigt, die jeweils beispielsweise und vorzugsweise aus einem gespritzten Schaumprofil (Hartschaum mit geschlossener Außenwandung (geschlossenporig)) gebildet sind. Zum Ausgleich der im Bereich der Umlenkrollen 12 auftretenden Spannungen ist im Fußbereich dieser T-Stollen 20 eine Dehnungsfuge 21 ausgebildet, die vorzugsweise elliptisch geformt sein kann und die Aufgabe hat, die langzeitige Befestigung dieser T-Stollen 20 zu gewährleisten.

Diese auf dem Band 13 befestigten T-Stollen 20 verhindern das Zurücklaufen der Flüssigkeit gegen die Drehrichtung des Bandes 13. Die gebildete Flüssigkeit wird somit gezwungen, durch die im Band 13 befindlichen Entwässerungskanäle 18 nach unten abzutropfen.

Auf diesem endlosen Band 13 sind jweils zwischen den quer zur Bandlängsrichtung vorstehenden T-Stollen 20 Platten aus Wirrfaservlies 22 befestigt, und zwar in besonderer Weise aufgeklebt, so daß die zu filternde Flüssigkeit durch die Hohlräume der Fasern und auch die Freiräume des mit dem Band 13 verbindenden Klebstoffbereiches auf das Band 13 und von dort gefiltert durch die Kanäle 18 nach unten abfließen kann.

Als Klebstoff zwischen der äußeren Schicht (Oberbelag) des endlosen Bandes 13 und der Wirrfaserschicht 22 kann beispielsweise ein PVC-Kleber als Duroplast verwendet werden, dessen Vorteil darin besteht, daß die Verklebung unabhängig von Druckeinflüssen ist. Während der Klebephase löst der Klebstoff die Fasern der Wirrstoffschicht 22 etwas an und diffundiert ein, ohne jedoch die Verbindung zwischen dem Vernetzungsklebstoff, der die einzelnen Fasern der Wirrstoffschicht 22 miteinander verbindet, aufzulösen.

Dieser Klebstoffbereich kann bis zu 1,5 mm betragen. Durch die Elastizität der ausgehärteten Klebeverbindung ist auch im kritischen Bereich der Bandumlenkung eine nahezu spannungslose Verbindung zwischen dem endlosen Band und den Wirrfaserschichten 22 gewährleistet.

Vorzugsweise besteht dieser Vernetzungsklebstoff aus einem Mischpolymerisat mit den Komponenten Vinylacetat, Vinylchlorid und Tetrahydrofuran.

Eingemischte Stabilisatoren können dabei eine Beständigkeit gegen UVA- sowie UVB-Strahlung bewirken.

Das Wirrfaservlies 22 ist vorzugsweise wiederum aus zwei Bereichen gebildet, und zwar einem bandbenachbarten Bereich, bei welchem der verklebende Vernetzungskleber die Wirrfasern 22 ausgelöst hat und dann daran ausgehärtet ist. Dadurch sind die Hohlräume zwischen den Wirrfasern 22 etwas verkleinert und die umgebenden Wirrfasern 22 ebenfalls erhärtet. Hierdurch ergibt sich auch eine gewisse Tragfähigkeit, so daß sich bei Belastung insbesondere durch die Feststoffteilchen die Wirrfasern nur wenig zusammendrücken.

Der darüberliegende weichere Bereich der lockeren Wirrfasern 22 fängt elastisch die Feststoffteilchen auf und hält diese fest, während die Filterflüssigkeit auf das Band 13 durchfließt.

Es ist vorteilhaft und bevorzugt, den äußeren Bereich des Wirrfaservlieses zusätzlich mit einem anhaftenden aushärtenden, zunächst flüssigen (sprühfähigen) Klebstoff zu besprühen, der aus demselben oder einem anderen Kunststoff besteht und der die Aufgabe hat, die Hohlräume etwas zu verkleinern und durch Verhärten der Wirrfasern zu stabilisieren, um eine gute Filterung zu erzielen.

Die Kunststoff-Fasern der Wirrfaserschicht 22 als Filtermaterial haben beispielsweise eine Feinheit von 15 - 17 Denier (oder ca. 1,6 - 1,9 tex) und zeigen ein Gewicht von 450 bis 540 g/m$^2$ .

Diese Kunststoff-Fasern sind teilweise als Vlies, vorzugsweise mit parallel verlaufenden Fasern so engmaschig gelegt, daß Feststoffteilchen über ca. 1 mm aus dem Band 13 wieder nach unten (im Bereich des Banduntertrums) herausfallen (selbstreinigend), während gefilterte Feststoffteilchen von einem Durchmesser kleiner als 1 mm im Wirrfaservlies verbleiben.

Unbrauchbar (verfüllte) Wirrfaserplatten können verhältnismäßig leicht dadurch ausgewechselt werden, daß die unbrauchbare Schicht bis auf das endlose Band 13 abgetrennt, z. B. abgeschnitten oder abgeschliffen wird und eine neue Wirrfaserplatte aufgelegt und dann mit dem Band 13 verklebt wird.

Das zu trennende Feststofflüssigkeitsgemenge trifft beispielsweise unter einem Winkel von 10 bis 20° von oben auf das endlose Band 13 auf, wobei die Feststoffe 23 zusammen mit der Transportflüssigkeit auf und in die Wirrfaserschicht 22 geleitet werden. Diese Wirrfaserschicht 22 hält die Menge der Feststoffe zurück und läßt durch seine Hohlräume das flüssige Fördermedium durch. Inwieweit sich die Feststoffteilchen beim Durchlauf auf der Unterseite des Bandes wieder aus den Hohlräumen lösen, hängt von deren Größe und damit deren Eigengewicht ab.

Bei größeren Feststoffteilchen kommt es zu keiner Verklammerung zwischen den Fasern der Wirrfaserschicht 22; sie fallen daher aufgrund ihres Eigengewichtes aus dem Untertrum des Bandes nach unten heraus. Bei kleineren Feststoffteilchen, die nicht durch Eigengewicht nach unten durchfallen, können zur Vermeidung einer Verfüllung des Bandes 13 mittels Sprühdosen o. dgl. diese Feinstteilchen ausgewaschen werden.

## Ansprüche

1. Bandfilter zum Filtern von Feststoffen o. dgl. aus Flüssigkeiten mit einem das Band überdeckenden Filterstoff, dadurch gekennzeichnet, daß auf einem aus einer oder mehreren Schichten bestehenden, flexiblen, endlosen, mit Abflußkanälen ausgestatteten Band eine Wirrfaserschicht als Filterschicht derart befestigt wie aufgeklebt ist, daß in der Befestigungszone in der Wirrfaserschicht stets Durchlauföffnungen für die das Band ablaufende Filterflüssigkeit gegeben sind.

2. Bandfilter nach Anspruch 1, dadurch gekennzeichnet, daß die Wirrfasern (22) aus synthetischen Fasern mit diese verfestigenden Kunststoffbindemitteln wie Klebstoffen ausgebildet sind.

3. Bandfilter nach den Ansprüchen 1 oder 2, dadurch gekennzeichnet, daß die Fasern der Wirrfaserschicht (22) eine Feinheit von 15 bis 17 Den aufweisen.

4. Bandfilter nach den Ansprüchen 1 bis 3, dadurch gekennzeichnet, daß die Wirrfaserschicht (22) ein Gewicht von 450 bis 540 g/m$^2$, vorzugsweise 470 bis 500 g/m$^2$ hat.

5. Bandfilter nach den Ansprüchen 1 bis 4, dadurch gekennzeichnet, daß die Wirrfaserschicht (22) einen bandbenachbarten Bereich aufweist, bei welchem der verklebende Vernetzungsklebstoff die Wirrfaser zunächst angelöst hat und dann ausgehärtet ist.

6. Bandfilter nach den Ansprüchen 1 bis 5, dadurch gekennzeichnet, daß die oberseitige Wirrfaserschicht (33) zusätzlich mit einem anhaftenden, aushärtenden und damit verschleißmindernden, zunächst flüssigen (sprühfähigen) Klebstoff besprüht ist, der einzelne Wirrfasern gegeneinander haftend festlegt.

7. Bandfilter nach den Ansprüche 1 bis 6, dadurch gekennzeichnet, daß zwischen den Wirrfaserplatten oder -bahnen T-förmige Stollen (20) quer zur Längsrichtung an dem Band (13) befestigt sind, im oberen Fußbereich jeweils eine Dehnungsfuge (21) angeordnet ist.

8. Bandfilter nach den Ansprüchen 1 bis 7, dadurch gekennzeichnet, daß die Wirrfaserschicht (22) und/oder die T-Stollen (20) auf einem mehrschichtigen, endlosen Transportband (13) befestigt sind.

9. Bandfilter nach den Ansprüchen 1 bis 8, dadurch gekennzeichnet, daß das endlose Band (13) aus drei miteinander verpreßten Schichten aufgebaut ist, in denen die äußeren Schichten jeweils mit einem an seiner Außenfläche geschlossenen Kunststoffbelag und die mittlere Schicht mit Textilbahnen wie geflochtenen oder gewebten Bahnen aus Kunstfasern ausgestattet ist.

10. Bandfilter nach den Ansprüchen 1 bis 9, dadurch gekennzeichnet, daß die äußeren Belagbahnen (16, 17) aus PVC gebildet sind.

11. Bandfilter nach den Ansprüchen 1 bis 10, dadurch gekennzeichnet, daß das Band (13) einen Durchmesser zwischen 3,0 bis 3,5 mm, vorzugsweise 3,2 bis 3,3 mm aufweist.

12. Bandfilter nach den Ansprüchen 1 bis 11, dadurch gekennzeichnet, daß das Band (13) ein Eigengewicht zwischen 3 bis 4 kg/m², vorzugsweise 3,5 kg/m² aufweist.

13. Bandfilter nach den Ansprüchen 1 bis 12, dadurch gekennzeichnet, daß das Band (13) auf seiner inneren (Lauf-) Oberfläche mit Profilierungen wie Kleinkaroprofilen ausgestattet ist.

# Fig. 1

# Fig. 2

„A"

Fig. 4

„B"

Fig. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-2 638 541 (ICHIKAWA WOOLEN) * Seite 10, Zeilen 23-26; Seite 11, Zeilen 1-25; Figur 1 * --- | 1-3,5, 11 | B 01 D 33/04 B 01 D 35/10 |
| A | DE-A-2 140 287 (HAMANO, TATSUJI, ICHIKAWA, CHIBA) * Seite 2, Zeilen 32-35; Seiten 3-7; Seite 8, Zeilen 1-3 * --- | 1-3,5, 11 | |
| A | FR-A-2 442 068 (TISSMETAL LIONEL-DUPONT) * Seiten 1-4 * --- | 1,2,4 | |
| A | US-A-3 059 312 (TH. A. JAMIESON) --- | | |
| A | US-A-3 190 451 (A.A. HOLLAND) --- | | |
| A | US-A-1 890 251 (G.J. FOWLER) ----- | | |

RECHERCHIERTE SACHGEBIETE (Int. Cl.4)

B 01 D

Der vorliegende Recherchenbericht wurde für alle Patentansprüche erstellt

| Recherchenort | Abschlußdatum der Recherche | Prüfer |
|---|---|---|
| DEN HAAG | 05-04-1989 | DE PAEPE P.F.J. |